# FASCICULE DE BREVET EUROPEEN

(11) **EP 3 391 680 B1**
(45) Date de publication et mention de la délivrance du brevet: **05.02.2020**
(21) Numéro de dépôt: 16825837.4
(22) Date de dépôt: 13.12.2016
(51) Int. Cl.: H04W 8/22, H04W 12/02

(54) **PROCÉDÉ DE GESTION D'AU MOINS UNE COMMUNICATION, DISPOSITIF ET PROGRAMME DE MODULE LOGICIEL CORRESPONDANTS**
VERFAHREN ZUR VERWALTUNG VON MINDESTENS EINER KOMMUNIKATION, ENTSPRECHENDE VORRICHTUNG UND SOFTWAREMODULPROGRAMM
METHOD FOR MANAGING AT LEAST ONE COMMUNICATION, CORRESPONDING DEVICE AND SOFTWARE MODULE PROGRAM

(30) Priorité: 17.12.2015 FR 1562702
(43) Date de publication de la demande: 24.10.2018
(73) Titulaire: Orange, 75015 Paris (FR)
(72) Inventeur: GESTRAUD, Yann, 35700 Rennes (FR); GYSS, Jean-François, 22300 Rospez (FR); BAILLY, Marc, 22560 Trebeurden (FR)
(86) Numéro de dépôt international: PCT/FR2016/053355
(87) Numéro de publication internationale: WO 2017/103419

(56) Documents cités:
- US-A1- 2014 258 397
- US-A1- 2015 065 087

## Description

### 1. Domaine de l'invention

Le domaine de l'invention est celui des télécommunications multimédia, telle que les communications entre utilisateurs par la voix, l'échange de messages textuels, vidéo ou l'échange de fichiers.

Plus précisément, la présente demande porte sur les communications interpersonnelles enrichies entre deux utilisateurs, ayant respectivement souscrit auprès d'opérateurs de télécommunications fournissant un accès à des réseaux distincts, et communicant au moyen d'une plate-forme offrant, quel que soit le type de réseau, des services de communication tels que la messagerie instantanée ou « *chat* », la présence, la voix et vidéo (ou vidéo en « live ») et le partage de fichiers.

### 2. Art antérieur

L'arrivée des téléphones intelligents dits « smartphones » et le développement des applications mobiles et de services par contournement (de l'anglais « *over the top* » OTT), indépendants des opérateurs, tels que Viber®, Whatsapp®, ou encore Skype® offrent également de nouveaux services de communications adaptés aux besoins de leurs clients.

C'est dans ce contexte que la norme de téléphonie mobile de service de communication interpersonnelle enrichie (de l'anglais « *Rich Communication service* » (RCS)), a été créée en 2012 à l'initiative de la GSM Association (GSMA).

Plus précisément, la norme RCS correspond à la mise en œuvre d'un système de communication interopérable, i.e. fonctionnant avec n'importe quel opérateur de réseau de télécommunications ayant déployé le service et sur n'importe quel équipement de téléphonie compatible avec cette norme RCS.

Les nouvelles fonctions proposées selon la norme RCS concernent avant tout les messages et les appels et visent à rendre accessibles aux mobiles les services actuellement proposés par les réseaux sociaux et les messageries instantanées existantes (i.e. services par contournement (de l'anglais « *over the top* » OTT), indépendants des opérateurs).

La norme RCS permet donc de classiquement téléphoner, mais également d'accéder à des services similaires à ceux fournis par des OTT, et ce au moyen d'un même identifiant (le numéro de téléphone).

Côté messages enrichis (dit « *rich messaging* » en anglais), la norme RCS permet, via une plate-forme RCS dédiée, la mise en place d'une messagerie instantanée (de l'anglais « *chat* » ou « instant messaging ») entre utilisateurs, la possibilité d'envoyer des fichiers et de créer des groupes de discussion instantanée. Côté appels enrichis (dit « *rich call »* ou « enriched calling » en anglais), la norme RCS permet le partage de vidéo, de messages, de localisation, ou de fichiers en cours d'appel. Ainsi, il est par exemple possible de superposer une fenêtre de conversation vidéo à une autre application en cours d'exécution.

En outre, la norme RCS propose un carnet d'adresse enrichi comprenant outre les informations de contact habituelles, à savoir numéro de téléphone, identité, adresse, etc., des informations supplémentaires permettant aux utilisateurs de partager : leur présence (disponible, occupé), un message d'humeur (statut), une photo ou encore un lien web favori, et qui peuvent être automatiquement synchronisées sur les équipements de téléphonie des utilisateurs partageant leur « profil », leur fiche contact. Ces contacts peuvent notamment être hébergés chez un opérateur différent de celui de l'utilisateur qui émet les messages.

Il est toutefois à noter que l'infrastructure associée à la norme RCS, à savoir la plate-forme de fourniture de service de communication et les serveurs dédiés correspondants ne sont pas déployés et gérés par un unique opérateur de réseau de télécommunication mais par l'ensemble des opérateurs qui y ont adhéré.

Chaque opérateur est libre de définir par exemple la taille maximale des messages qu'il autorise sur son réseau, la nature de ces messages, images, vidéos, musiques, fiche contact, localisation, fichiers, etc.

Ainsi, les règles d'utilisation des services fournis par la plate-forme RCS ainsi que les règle de confidentialité associées sont différentes d'un opérateur de réseau de télécommunications à un autre, ou encore d'un fournisseur de services utilisant cette plate-forme RCS à un autre.

Plus précisément, les communications interpersonnelles selon la norme RCS sont établies au moyen de sessions selon le protocole de communication standard SIP (de l'anglais « Session Initiation Protocol »). Préalablement, ou durant l'établissement de la session SIP, un échange de capacité entre les équipements de téléphonies d'au moins deux utilisateurs ayant respectivement souscrit auprès d'opérateurs de télécommunications fournissant un accès à des réseaux distincts, est mis en œuvre afin de s'assurer qu'un utilisateur de l'équipement destinataire de la communication a la capacité de traiter le type de communication initiée par l'équipement émetteur.

Le document de brevet US 2015/065087 décrit un système de gestion de communication dans lequel un terminal détermine à partir d'informations relatives à un utilisateur appelant, le niveau de sécurité associé au terminal de l'utilisateur appelant mais ne propose pas d'informations de niveau de sécurité si l'utilisateur appelant a souscrit auprès d'un opérateur ou un fournisseur de services distinct.

Ainsi, actuellement, il n'existe pas de solution satisfaisante permettant de garantir à l'utilisateur qu'il n'encourt pas de risque lorsqu'il communique avec un utilisateur ayant souscrit auprès d'un opérateur distinct du sien.

En effet, ce n'est pas parce que le propre opérateur d'un utilisateur lui garantit la non-exploitation du contenu de ses communications à des fins commerciales que l'opérateur du destinataire de ces communications va obéir aux mêmes garanties.

Il existe donc un besoin pour de nouvelles techniques de communication interpersonnelles enrichies, permettant de mieux protéger les informations confidentielles d'un utilisateur en l'avertissant des risques encourus.

### 1. Exposé de l'invention

L'invention propose une solution nouvelle ne présentant pas cet inconvénient de l'art antérieur, sous la forme d'un procédé de gestion d'au moins une communication entre un premier et au moins un deuxième équipements de communication utilisés respectivement sur des réseaux de communications distincts, gérés respectivement par un premier et au moins un deuxième dispositifs de gestion de communications.

En particulier, le procédé comprend les étapes suivantes mises en œuvre par le premier dispositif de gestion de communication :
- obtention d'au moins un indicateur de risque de non respect de confidentialité de données associées à la communication, le risque de non respect de confidentialité provenant du deuxième dispositif de gestion de communication ;
- transmission de l'indicateur de risque au premier équipement de communication.

La présente demande propose ainsi d'améliorer les techniques de communication interpersonnelles enrichies.

En effet, la présente demande permet d'alerter l'utilisateur du premier équipement du risque, de non respect de confidentialité du contenu de sa communication, qu'il encourt lorsqu'il établira une communication avec l'utilisateur du deuxième équipement de communication.

Un tel risque de non respect de confidentialité de données associées à sa communication correspond notamment à un risque d'exploitation à des fins commerciales du contenu de la communication et des informations personnelles de l'utilisateur telle que sa fiche de contact avec ses coordonnées ou son activité.

3bis Une telle exploitation à des fins commerciales des données d'un utilisateur n'est pas opérée par son propre fournisseur de service ou son propre opérateur qui s'engage à respecter la confidentialité de ses données, mais par des tiers associés à l'opérateur de son interlocuteur et/ou par l'opérateur de son interlocuteur directement.

Il est à noter que l'indicateur de risque selon la présente invention peut être transmis pour chaque communication, ou pour un groupe de communications correspondant à une période de temps prédéterminée définie par l'utilisateur ou par l'opérateur ou le fournisseur de services, ou périodiquement selon une période prédéterminée définie par l'utilisateur ou par l'opérateur ou le fournisseur de services.

Selon un aspect particulier de la présente demande, ladite au moins une communication correspond à une communication interpersonnelle enrichie conforme à la norme de communication RCS®.

Il est à noter que la norme de communication RCS® englobe par extension les services de messagerie SMS (« SMS » de l'anglais « Short Message Service ») et MMS (« MMS » de l'anglais « Multimedia Message Service ») pour l'échange de messages écrits ou en texte enrichi.

Ce type de communication conforme à la norme RCS® permet d'offrir de nombreuses fonctionnalités à l'utilisateur qui est alors dispensé d'utiliser les messageries instantanées existantes (i.e. services par contournement (de l'anglais « *over the top »* OTT), indépendants des opérateurs), afin d'accéder à des fonctionnalités similaires.

Selon un aspect de la présente demande, les étapes d'obtention et de transmission dudit au moins un indicateur de risque sont mises en œuvre par le premier dispositif de gestion de communications au cours d'une phase d'échange avec ledit au moins un deuxième dispositif de gestion de communications,
la phase d'échange comprenant au moins les étapes suivantes mises en œuvre par ledit premier dispositif de gestion de communications, pour ladite au moins une communication:
- réception d'une demande de capacité dudit au moins un deuxième équipement de communication, la demande de capacité étant émise par le premier équipement de communication,
- émission de la demande de capacité audit au moins un deuxième dispositif de gestion de communications,
- réception d'une information représentative de capacité dudit au moins un deuxième équipement de communication émise par ledit au moins un deuxième dispositif de gestion de communications.

En d'autres termes, selon cet aspect de la présente demande, on enrichit le mécanisme classique d'échanges de capacité par l'obtention d'un indicateur de risque d'exploitation de données associées à la communication par le fournisseur de service de l'opérateur du deuxième réseau ou un tiers/partenaire de cet opérateur.

Selon une caractéristique particulière, l'information représentative de capacité dudit au moins un deuxième équipement de communication et ledit au moins un indicateur de risque sont transmis dans un même signal au premier équipement de communication.

Cette caractéristique particulière permet de mutualiser une transmission pour transmettre à la fois l'indicateur de risque et l'information représentative de capacité, au lieu de mettre en œuvre une transmission de l'information représentative de capacité d'une part et une transmission d'indicateur de risque d'autre part.

Toutefois, il est à noter que selon une autre variante de la présente demande, la mise en œuvre de deux transmissions indépendantes respectivement dédiées à l'information représentative de capacité d'une part et à la transmission d'indicateur de risque d'autre part sont possibles.

Selon une autre caractéristique, l'émission de la demande de capacité est mise en œuvre avant ou en cours d'établissement de ladite au moins une communication.

Ainsi, plusieurs modes d'échange de capacité peuvent être mis en œuvre, d'une part avant l'établissement de la communication selon un protocole de communication SIP OPTIONS (SIP de l'anglais « *Session Initiation Protocol* ») ou Presence SIMPLE et d'autre part lors de l'établissement de la communication au moyen d'une négociation SDP (de l'anglais « Session Description Protocol »).

Selon une autre caractéristique de la présente demande, le type dudit au moins un indicateur de risque est formaté par le premier dispositif de gestion de communications en fonction du type de la communication.

En d'autres termes, si le type de communication est par exemple une communication textuelle, le type de l'indicateur de risque sera adapté à l'interface utilisateur utilisée sur le premier équipement pour mettre en œuvre ce type de communication et correspondra à un message textuel de type chat/sms.

Selon un autre exemple, dans le contexte d'une communication vidéo, le type de l'indicateur de risque correspondra à un élément vidéo (son et/ou image) qui avertira l'utilisateur.

De manière similaire, dans un contexte de communication purement audio, le type de l'indicateur de risque correspond par exemple à une annonce vocale.

Il est par ailleurs à noter, que l'indicateur de risque selon la présente demande peut comprendre un hyperlien ou une requête d'accès qui une fois activée par l'utilisateur lui permet d'accéder à un rapport plus détaillé sur le risque qu'il encourt ce rapport pouvant être également téléchargé par activation de l'hyperlien (ou de la requête d'accès) indiqué au sein de l'indicateur de risque.

Ainsi, il est à noter que l'indicateur de risque présentera préférentiellement une taille réduite et prédéterminée (quelques octets ou quelques centaines d'octets selon le protocole de communication utilisé) afin d'éviter toute surcharge de la bande passante.

Selon une autre caractéristique de la présente demande, ledit au moins un indicateur de risque est émis, sur requête du premier dispositif de gestion de communications, par :
- ledit au moins un deuxième dispositif de gestion de communications, et/ou
- une base de données indépendante dudit au moins un deuxième dispositif de gestion de communications, la base de données stockant, respectivement pour une pluralité d'opérateurs ou de fournisseurs de services distincts comprenant un opérateur ou un fournisseur de services associé audit au moins un deuxième dispositif de gestion de communications, des informations de risque de non respect de confidentialité de données de communication.

En d'autres termes, l'indicateur de risque peut être fourni directement selon un niveau de confiance déclarative par le deuxième dispositif de gestion de communications, ou alternativement par au moins une base de données interrogée par le premier dispositif.

En outre, il est possible que les deux alternatives soient mises en œuvre et que les deux indicateurs de risque obtenus soient transmis tels quels au premier équipement de communication.

Il est également possible que les deux alternatives soient mises en œuvre et que ne soit transmis au premier équipement de communication qu'un indicateur de risque correspondant à une combinaison (i.e. une réécriture/adaptation de l'indicateur fourni par le deuxième dispositif de gestion de communications) des deux indicateurs de risque obtenus, cette combinaison pouvant intégrer une pondération de sorte à favoriser la source correspondant au dispositif ou la source correspondant à la base de donnée indépendante.

Selon un autre aspect de la présente demande, ledit au moins un indicateur de risque est émis, sur requête du premier dispositif de gestion de communications, par la base de données indépendamment de ladite au moins une communication.

Une telle caractéristique permet, par exemple, de consulter la base de données sur requête et de transmettre au premier équipement l'indicateur de risque afin par exemple d'enrichir la fiche de contact associée au deuxième équipement qu'il contient, de sorte que le risque associé apparaisse directement sur la fiche de contact et soit mis à jour lorsque la base de données est mise à jour indépendamment de l'établissement d'une communication et de l'échange de capacité associé à cet établissement.

Selon un autre aspect de la demande, ledit au moins un indicateur de risque est émis automatiquement lorsqu'une mise à jour de la base de données est effectuée.

La présente demande concerne également un signal de gestion d'au moins une communication entre un premier et au moins un deuxième équipements de communication utilisés respectivement sur des réseaux de communications distincts, gérés respectivement par un premier et au moins un deuxième dispositifs de gestion de communications.

Selon la présente demande, un tel signal est transmis au cours d'une phase d'échange avec ledit au moins un deuxième dispositif de gestion de communications, et comprend une information représentative de capacité dudit au moins un deuxième équipement de communication et au moins un indicateur de risque de non respect, par ledit au moins un deuxième dispositif de gestion communications, de confidentialité de données associées à ladite au moins une communication.

En d'autres termes, selon cet aspect particulier mis en œuvre au cours d'une phase d'échange de capacité entre le premier et deuxième équipements de communication, la transmission de l'indicateur de risque est effectuée mutuellement avec l'information représentative de capacité dudit au moins un deuxième équipement de communication au sein d'un même signal.

Il est toutefois possible, selon un autre aspect tel qu'indiqué précédemment, que l'indicateur de risque soit transmis au premier équipement indépendamment de la phase d'échange de capacité ou encore de la communication.

La présente demande concerne également un dispositif de gestion d'au moins une communication entre un premier et au moins un deuxième équipements de communication utilisés respectivement sur des réseaux de communications distincts, gérés respectivement par le dispositif de gestion et au moins un deuxième dispositif de gestion de communications.

Selon la présente demande, un tel dispositif de gestion d'au moins une communication comprend:
- un module d'obtention d'au moins un indicateur de risque de non respect de confidentialité de données associées à ladite au moins une communication,
- un module de transmission dudit au moins un indicateur de risque au premier équipement de communication.

Un tel dispositif de gestion d'au moins une communication est notamment adapté à mettre en œuvre le procédé de gestion d'au moins une communication décrit précédemment. Il s'agit par exemple d'un serveur de communication ou d'un serveur de capacité (notamment lorsque les étapes d'obtention et de transmission selon le procédé précédemment décrit sont mises en œuvre au cours d'une phase d'échange de capacité), associés respectivement à un opérateur de réseau de télécommunications ou à un fournisseur de services.

Il pourra bien sûr comporter les différentes caractéristiques relatives au procédé de gestion d'au moins une communication selon la présente demande. Ainsi, les caractéristiques et avantages de ce dispositif sont les mêmes que ceux du procédé de gestion selon la présente demande, et ne sont pas détaillés plus amplement.

La présente demande concerne également un équipement de communication apte à recevoir et à traiter l'indicateur de risque transmis par un dispositif de gestion de communication décrit précédemment.

Un autre aspect de la présente demande concerne un programme de module logiciel comportant des instructions de code de programme de module logiciel pour l'exécution des étapes du procédé de gestion d'au moins une communication selon la présente demande lorsque le programme est exécuté par un ordinateur.

L'objet de la présente demande peut ainsi être mis en œuvre de diverses manières, notamment sous forme matérielle (« hardware ») ou logiciel (« software »).

### 4. Liste des figures

D'autres caractéristiques et avantages de l'objet de la présente demande apparaîtront plus clairement à la lecture de la description suivante d'un mode de réalisation particulier, donné à titre de simple exemple illustratif et non limitatif, et des dessins annexés parmi lesquels :
- la figure 1 présente les principales étapes d'un procédé de gestion d'au moins une communication selon un mode de réalisation de l'invention,
- la figure 2 présente un autre mode de réalisation d'un procédé de gestion d'au moins une communication selon l'invention,
- la figure 3 illustre la mise en œuvre d'un procédé de gestion d'au moins une communication selon la figure 1 ou la figure 2,
- la figure 4 présente la structure d'un dispositif de gestion selon un mode de réalisation particulier de l'invention
- la figure 5 présente la structure d'un équipement de communication selon un mode de réalisation particulier de l'invention.

### 5. Description d'un mode de réalisation de l'invention

Le principe général de l'invention repose sur la fourniture, à un utilisateur, d'un indicateur de risque d'exploitation, des données personnelles de cet utilisateur associées à une communication, par l'opérateur ou le fournisseur de service du destinataire de la communication.

En d'autres termes, pour un utilisateur soucieux de la non-exploitation de ses données personnelles par des tiers et/ou par son fournisseur de service, la présente demande fournit une solution permettant de connaître, en fonction de son interlocuteur, si ces règles de non-exploitation sont également respectées par l'opérateur ou le fournisseur de service de son interlocuteur.

Plus précisément, la présente demande propose qu'une telle alerte soit fournie, à l'utilisateur (via son équipement de communication), par un dispositif de gestion de communication gérant l'établissement des communications de cet utilisateur.

Il est à noter que le principe général selon l'invention peut être aisément étendu du cas de la communication entre deux interlocuteurs au cas où une communication serait établie avec une pluralité d'interlocuteurs simultanément, dans ce cas un indicateur de risque, par interlocuteur, serait obtenu et transmis à l'utilisateur du premier équipement U1.

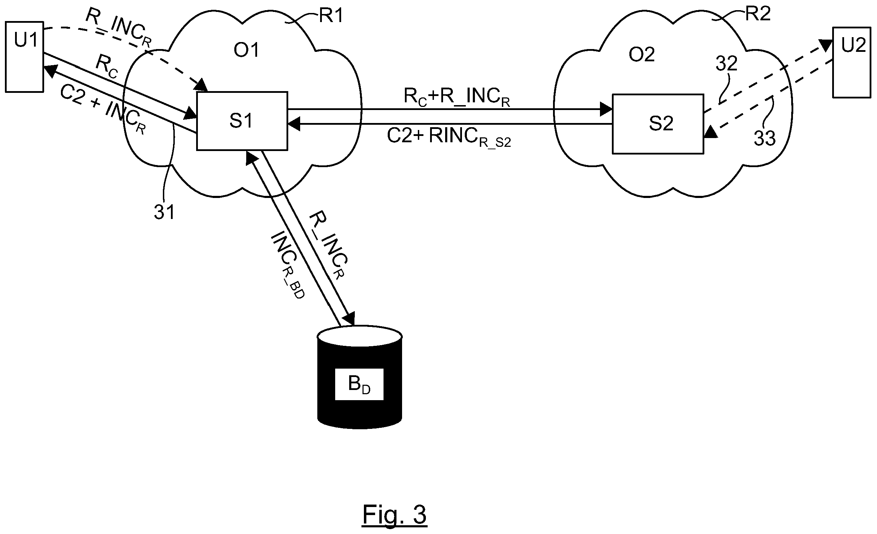

On décrit ci-après un exemple de mise en œuvre de l'objet de la présente demande dans le cadre de la mise en œuvre de communications interpersonnelles enrichies entre un premier et au moins un deuxième équipements U1 et U2 de communication utilisés respectivement sur des réseaux R1 et R2 de communications distincts, gérés respectivement par un premier S1 et au moins un deuxième S2 dispositifs de gestion de communications, tel qu'illustré selon **la** **figure 3****.**

Selon un aspect particulier, le type de communication gérée selon la présente demande est une communication interpersonnelle enrichie conforme à la norme de communication RCS® telle que décrite précédemment.

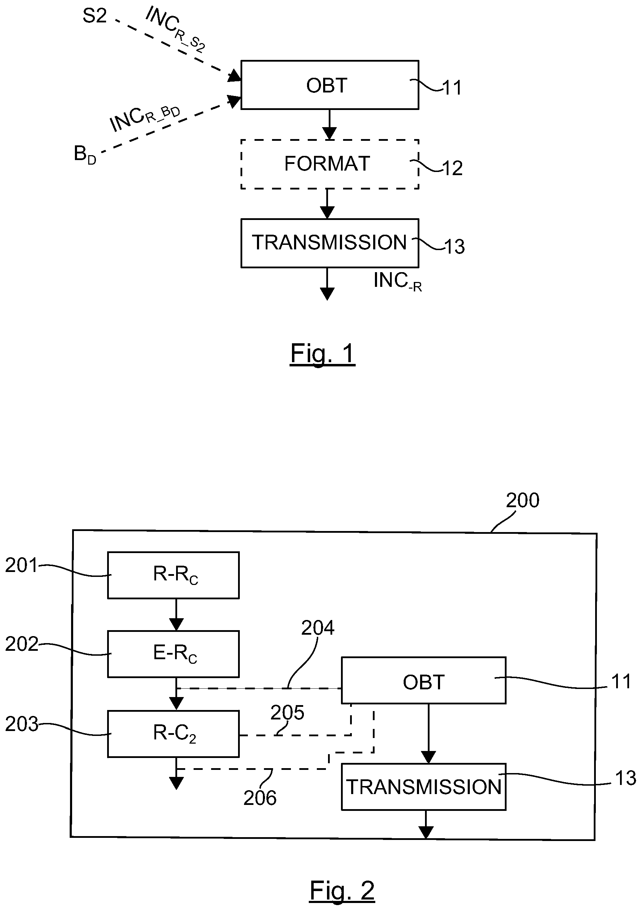

On présente, en relation avec la **figure 1****,** les principales étapes mises en œuvre par un procédé de gestion d'au moins une communication selon un mode de réalisation de l'invention. Ces différentes étapes sont par exemple mises en œuvre au sein d'un dispositif S1 de gestion de communication tel que représenté sur la **figure 3****.**

Ainsi, la présente demande met en œuvre principalement deux étapes à savoir : d'une part l'obtention (11) d'au moins un indicateur de risque INC_{R} de non respect, par le deuxième dispositif S2 de gestion communications, de confidentialité de données associées à ladite au moins une communication, et d'autre part la transmission (13) de l'indicateur de risque au premier équipement U1 de communication.

En particulier, selon un premier mode de réalisation, l'indicateur de risque INC_{R} est émis par le deuxième dispositif S2 de gestion de communications.

En d'autres termes, l'indicateur de risque INC_{R_S2} est fourni directement selon un niveau de confiance déclarative par le deuxième dispositif S2 de gestion de communications.

Le cas échéant (32, 33) le deuxième dispositif S2 interroge le deuxième équipement U2, ou l'utilisateur du deuxième équipement via ce deuxième équipement U2 pour obtenir INC_{R_S2} qu'il réémet ensuite au premier dispositif de gestion de communication S1.

Ainsi, selon ce premier mode de réalisation, l'utilisateur du premier équipement de communication U1 émet à destination du premier dispositif de gestion de communication S1, dont il dépend, une requête d'indicateur de risque R_INC_{R} associé à l'interlocuteur possédant le deuxième équipement U2.

Le premier dispositif de gestion de communication S1 réémet cette requête d'indicateur de risque R_INC_{R} vers le deuxième dispositif S2 de gestion de communication et reçoit (11) de celui-ci l'indicateur de risque INC_{R_S2} = OUI, qu'il transmet (13) ensuite à U1.

Selon un aspect particulier de ce premier mode de réalisation tel qu'illustré par la **figure 2****,** lesdites étapes d'obtention (11) et de transmission (13) de l'indicateur de risque sont mises en œuvre par le premier dispositif S1 de gestion de communications au cours d'une phase d'échange (200) avec le deuxième dispositif S2 de gestion de communications.

Plus précisément, la phase d'échange (200) comprend au moins les étapes suivantes mises en œuvre par le premier dispositif S1 de gestion de communications:
- réception (201) d'une demande de capacité Rc du deuxième équipement U2 de communication, la demande de capacité Rc étant émise par le premier équipement U1 de communication,
- émission (202) de la demande de capacité Rc au deuxième dispositif S2 de gestion de communications,
- réception (203) d'une information représentative de capacité C2 du deuxième équipement U2 de communication émise par le deuxième dispositif S2 de gestion de communications (soit par le deuxième dispositif S2 de gestion de communications directement ou par le deuxième équipement de communication U2 via le deuxième dispositif S2 de gestion de communications).

Ainsi, selon cet aspect particulier tel que représenté par **la** **figure 2****,** le mécanisme classique d'échange de capacité entre deux équipements de communication U1 et U2 établissant une communication est étendu de sorte à comprendre simultanément la gestion de l'indicateur de risque INC_{R} de non respect de confidentialité de données associées à ladite au moins une communication.

Dans ce cas particulier, l'indicateur de risque INC_{R_S2} est traité comme une capacité supplémentaire associée à l'équipement de communication U2.

Il est à noter que l'obtention (11) de l'indicateur de risque INC_{R_S2} peut être mise en œuvre préalablement (204), simultanément (205) ou successivement (206) à l'étape de réception (203) d'une information représentative de capacité C2 du deuxième équipement U2 de communication.

Par ailleurs, il est à noter que l'émission (202) de la demande de capacité Rc est mise en œuvre avant ou en cours d'établissement de la communication.

Ainsi, plusieurs modes d'échange de capacité peuvent être mis en œuvre, d'une part avant l'établissement de la communication selon un protocole de communication SIP OPTIONS (où la réponse 200 OK à la demande Rc contient une liste de tags chacun définissant une capacité du deuxième équipement de communication U2) ou Presence SIMPLE (où la réponse à la demande de présence Rc contient la liste des services supportés par U2) et d'autre part lors de l'établissement de la communication au moyen d'une négociation SDP lors de l'établissement de la session SIP, qui permet d'échanger des informations de capacité au démarrage de la conversation entre utilisateurs.

Il est à noter que ce premier mode de réalisation est préférentiellement mis en œuvre lorsque l'opérateur O2 ou le fournisseur de services associé au deuxième dispositif S2 de gestion de communication est « transparent » (i.e. auquel on fait a priori confiance).

Selon un deuxième mode de réalisation, l'indicateur de risque INC_{R_BD} est obtenu (11) uniquement de la base de données B_{D} indépendante du deuxième dispositif S2 de gestion de communications.

Une telle obtention (11) est par exemple mise en œuvre indépendamment de l'établissement d'une communication (e.g. service de téléphonie audio) lorsque l'utilisateur du premier équipement U1 souhaite utiliser l'objet de la présente demande pour enrichir son carnet de contacts sans pour autant établir une communication.

Plus précisément, une telle base de données B_{D} stocke, respectivement pour une pluralité d'opérateurs ou de fournisseurs de services distincts comprenant un opérateur ou un fournisseur de services associé au deuxième dispositif S2 de gestion de communications, des informations de risque de non respect de confidentialité de données de communication.

Par exemple, un tel stockage peut être effectué sous forme de liste associant deux à deux un opérateur ou fournisseur de service avec un risque d'exploitation.

Un exemple de liste est illustré notamment par le tableau ci-dessous en relation avec l'exemple de mise en œuvre de la **figure 3**:

| Opérateur/fournisseur de service | Risque d'exploitation |
|---|---|
| O1 | NON |
| O2 | OUI |
| ... | ... |

Selon une première alternative, une telle base de données B_{D} est par exemple associée au premier dispositif S1 de gestion de communications. En d'autres termes, il existe par exemple :
- un lien de dépendance physique (la base de données est physiquement et matériellement intégrée au serveur S1),
- ou un lien commercial/patrimonial, la base de donnée B_{D} est affiliée comme le premier dispositif S1 à un même opérateur O1.

Dans ce cas, l'indicateur de risque INC_{R_BD} délivré par la base de données B_{D}, correspond à une évaluation, associée à l'opérateur O1 auquel est associé le premier dispositif S1 de gestion de communications, du non respect de la confidentialité des données personnelles de l'utilisateur du premier équipement de communication U1.

Selon une deuxième alternative, la base de données B_{D} est indépendante du premier dispositif S1 de gestion de communications et est par exemple fournie par un tiers de confiance, par exemple certifié par un régulateur du marché des opérateurs.

Dans ce cas, l'indicateur de risque INC_{R_BD} délivré par la base de données B_{D}, correspond à une évaluation, objective garantie par un tiers, du non respect de la confidentialité des données personnelles de l'utilisateur du premier équipement de communication U1.

Ainsi, selon ce deuxième mode de réalisation, l'utilisateur du premier équipement de communication U1 émet à destination du premier dispositif de gestion de communication S1, dont il dépend, une requête d'indicateur de risque R_INC_{R} associé à l'interlocuteur possédant le deuxième équipement U2.

Le premier dispositif de gestion de communication S1 réémet cette requête d'indicateur de risque R_INC_{R} vers la base de donnée B_{D} et reçoit (11) par exemple de celle-ci l'indicateur de risque binaire INC_{R_BD} = OUI, qu'il transmet (12) ensuite à U1 (par exemple sous la forme d'une valeur binaire 0).

Au vu de cet indicateur de risque binaire INC_{R_BD} = OUI, l'utilisateur du premier équipement U1 pourra enrichir la fiche de contact associé à l'utilisateur du deuxième équipement U2 en ajoutant cette information sous la forme d'un champ de la fiche de contact, ou pourra bloquer ce contact s'il souhaite éviter toute communication ultérieur avec cet interlocuteur.

Selon une mise en œuvre particulière et optionnelle, un équipement U1 recevant un tel indicateur de risque binaire INC_{R_BD} = OUI correspondant à un risque avéré d'exploitation des données personnelles de son utilisateur, pourrait activer automatiquement (i.e. sans intervention de l'utilisateur) le blocage de l'établissement de communications (i.e. échanges de données) avec l'interlocuteur possédant le deuxième équipement U2. Inversement, en cas de réception d'un indicateur de risque binaire INC_{R_BD} = NON (transmis par exemple sous la forme d'une valeur binaire 1), l'équipement U1 débloquerait automatiquement l'interlocuteur possédant le deuxième équipement U2, si celui-ci était bloqué ou continuerait à autoriser l'établissement de communications entre les deux équipements U1 et U2.

Selon une autre variante de ce deuxième mode de réalisation où l'indicateur de risque INC_{R_BD} est obtenu (11) uniquement de la base de données B_{D}, indépendamment de l'établissement d'une communication, l'indicateur de risque INC_{R_BD} n'est pas obtenu (11) sur requête du dispositif de gestion S1 mais est émis automatiquement par la base de données (B_{D}) en cas de mise à jour de celle-ci.

Selon un troisième mode de réalisation, les premier et deuxième modes de réalisation décrits précédemment sont combinés tel que représentés sur la **figure 3****.**

En particulier selon la combinaison de ces deux modes, telle que représentée sur **la** **figure 3****,** l'obtention et la transmission de l'indicateur de risque sont optionnellement mis en œuvre au cours de la phase (200) d'échange de capacité décrite précédemment en relation avec le premier mode de réalisation.

En particulier, tel que représenté en pointillé, selon ce troisième mode de réalisation le premier équipement U1 ne met pas en œuvre systématiquement une requête d'indicateur de risque R_INC_{R} auprès du premier dispositif S1 de gestion de communications.

En effet, selon une caractéristique de réalisation, dès lors que le premier dispositif S1 de gestion de communications reçoit de U1 une demande de capacité Rc il émet ensuite en toute autonomie une requête d'indicateur de risque R_INC_{R} à destination du deuxième dispositif S2 de gestion de communications et de la base de donnée B_{D}.

Selon ce troisième mode de réalisation, le premier dispositif de gestion de communication S1 reçoit deux indicateurs INC_{R_S2} et INC_{R_BD} de risques (simultanément ou non) provenant respectivement du deuxième dispositif S2 de gestion de communications, et de la base de données B_{D} indépendante du deuxième dispositif S2 de gestion de communications.

Selon une première alternative, le premier dispositif de gestion de communication S1 réémet sous la forme d'un doublet INC_{R} (INC_{R_52}, INC_{R_BD}) ces informations au premier équipement de communication U1. Dans ce cas, c'est l'utilisateur de ce premier équipement U1 qui analysera ces deux informations provenant respectivement, de l'opérateur O2 ou du fournisseur de services associé au deuxième équipement de communication U2 (selon un niveau de confiance déclarative relative à la transparence de « O2 »), et de la base de donnée B_{D} (selon un niveau de confiance associé à l'opérateur O1 de l'équipement de communication U1, ou un niveau de confiance garanti par un tiers indépendant lorsque la base de donnée B_{D} est indépendante des opérateurs O1 et O2).

Selon une deuxième alternative, le premier dispositif de gestion de communication S1 combine ces deux indicateurs INC_{R_S2} et INC_{R_BD}.

Une telle combinaison peut optionnellement comprendre une pondération de sorte à favoriser la source d'indicateur de risque correspondant au dispositif ou la source d'indicateur de risque correspondant à la base de donnée indépendante par exemple sous la forme : INC_{R} = a. INC_{R_S2} + b. INC_{R_BD} avec a et b des paramètres de pondération compris entre 0 et 1. Ainsi, selon cette alternative, la valeur de l'indicateur de risque correspond par exemple à un pourcentage, une valeur entière, une valeur comprise entre 0 et 1...

Selon une caractéristique particulière illustrée sur la **figure 3**, l'information représentative de capacité C2 du deuxième équipement de communication U2 et l'indicateur de risque INC_{R} sont transmis dans un même signal (31) de communication au premier équipement de communication U1 afin de mutualiser leur transmission.

Pour l'un quelconque des trois modes de réalisation décrits précédemment, une fois l'indicateur de risque INC_{R} obtenu (11) du deuxième dispositif S2 de gestion de communications et/ou de la base de donnée (B_{D}), le premier dispositif S1 de gestion de communications met en œuvre optionnellement (tel que représenté en pointillés sur la **figure 1**), une étape de formatage (12), codage (e.g. binaire) ou réécriture de l'indicateur de risque INC_{R} en fonction du type de communication mis en œuvre entre les deux équipements de communication U1 et U2.

Un tel formatage (12) correspond par exemple à la transformation de l'indicateur de risque INC_{R} en données qui, une fois affichées sur le premier équipement de communication U1, correspondront à une icône ou un message d'avertissement, de prévenir l'utilisateur du premier équipement de communication U1 du risque d'exploitation à des fins commerciales de l'éventuelle communication à venir.

Alternativement, dans le contexte d'une communication textuelle, un tel formatage (12) consistera à transformer l'indicateur de risque INC_{R} en un message de type chat / sms lui indiquant que la conversation qu'il entame est susceptible d'être exploiter à des fins commerciales.

Alternativement, dans le contexte d'une communication vidéo, un tel formatage (12) consistera à transformer l'indicateur de risque INC_{R} en un message indiquant que la conversation qu'il entame est susceptible d'être exploitée à des fins commerciales.

Alternativement, dans le contexte d'une communication audio, un tel formatage (12) consistera à transformer l'indicateur de risque INC_{R} en une annonce vocale ou un son spécifique indiquant que la conversation qu'il entame est susceptible d'être exploiter à des fins commerciales.

Alternativement, un tel formatage (12) consistera à transformer l'indicateur de risque INC_{R} en un signal de blocage de l'établissement de ce type de communication avec l'utilisateur du deuxième équipement de communication U2 si tel est le choix de l'utilisateur du premier équipement de communication U1.

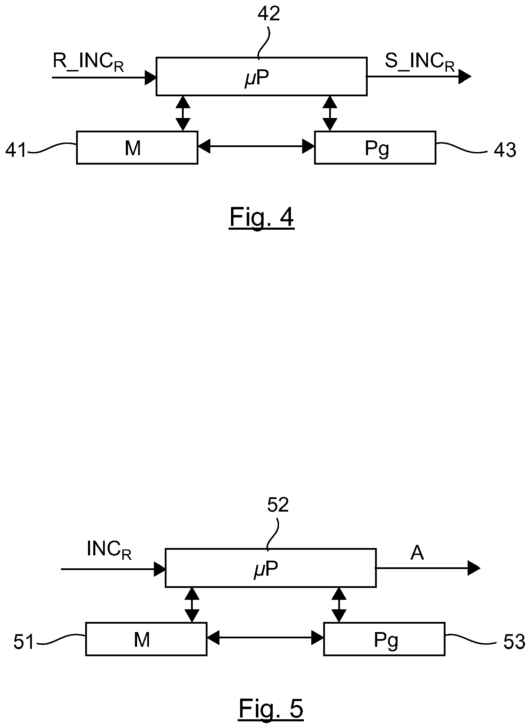

On présente finalement, en relation avec la **figure 4****,** la structure simplifiée d'un dispositif de gestion de communication mettant en œuvre une technique de gestion de communication selon les modes de réalisation décrits ci-dessus.

Un tel dispositif de gestion de communication comprend une mémoire 41 comprenant une mémoire tampon, une unité de traitement 42, équipée par exemple d'un microprocesseur ***µP***, et pilotée par le programme d'ordinateur 43, mettant en œuvre le procédé de gestion de communication selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée une requête R_INC_{R} d'établissement de communication ou d'interrogation de base de données B_{D} (émise par un équipement de communication U1 ou par la base de données elle-même qui en cas de mise à jour signale au dispositif de gestion de communication S1 qu'elle peut être réinterrogée). Le microprocesseur de l'unité de traitement 42 met en œuvre les étapes du procédé de gestion de communication décrit précédemment, selon les instructions du programme d'ordinateur 43, pour alerter l'utilisateur de l'équipement de communication U1 du risque qu'il encourt lorsqu'il communique avec un utilisateur ayant souscrit auprès d'un opérateur, associé à au moins un deuxième dispositif S2 de gestion de communications, distinct du sien. Pour cela, le dispositif de gestion comprend, outre la mémoire tampon 41, un module d'obtention d'au moins un indicateur de risque de non respect, par ledit au moins un deuxième dispositif S2 de gestion de communications, de confidentialité de données associées à ladite au moins une communication, et un module de transmission dudit au moins un indicateur de risque audit premier équipement U1 de communication. Ces modules sont pilotés par le microprocesseur de l'unité de traitement 42.

On présente finalement, en relation avec la **figure 5****,** la structure simplifiée d'un équipement de communication (U1) géré par un dispositif de gestion de communication (S1), illustré par la figure 4, et mettant en œuvre la technique de gestion de communication selon les modes de réalisation décrits ci-dessus.

Un tel équipement de communication (U1) comprend une mémoire 51 comprenant une mémoire tampon, une unité de traitement 52, équipée par exemple d'un microprocesseur ***µP***, et pilotée par le programme d'ordinateur 53, mettant en œuvre le procédé de gestion de communication selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un indicateur de risque INC_{R} alertant (A) l'utilisateur de l'équipement de communication (U1) du risque qu'il encourt lorsqu'il communique avec un utilisateur ayant souscrit auprès d'un opérateur, associé à au moins un deuxième dispositif S2 de gestion de communication. Le microprocesseur de l'unité de traitement 52 traite cet indicateur de risque INC_{R}, selon les instructions du programme d'ordinateur 53, afin de prévenir et protéger, au vu du risque indiqué, l'utilisateur de l'équipement de communication U1 lorsqu'il communique avec un utilisateur ayant souscrit auprès d'un opérateur distinct du sien. Pour cela, l'équipement de communication comprend, outre la mémoire tampon 51, un module de réception et de traitement d'au moins un indicateur de risque de non respect, par ledit au moins un deuxième dispositif S2 de gestion de communications, de confidentialité de données associées à ladite au moins une communication.

Selon un mode de réalisation, particulier, le module de réception et de traitement est activé au cours d'une phase d'échange avec le deuxième dispositif (S2) de gestion de communications, et reçoit un signal comprenant une information représentative de capacité du deuxième équipement (U2) de communication et un indicateur de risque de non respect, par le deuxième dispositif (S2) de gestion communications, de la confidentialité de données associées à ladite au moins une communication.

Selon un autre mode de réalisation, l'équipement de communication comprend également un module de blocage et/ou de déblocage d'établissement de communication avec le deuxième équipement de communication, le module de blocage et/ou de déblocage étant activé en fonction de la valeur de l'indicateur de risque. Ces modules sont pilotés par le microprocesseur de l'unité de traitement 52.

## Revendications

1. Procédé de gestion d'au moins une communication entre un premier et au moins un deuxième équipements (U1, U2) de communication utilisés respectivement sur des réseaux (R1, R2) de communications distincts, gérés respectivement par un premier (S1) et au moins un deuxième (S2) dispositifs de gestion de communications,
**caractérisé en ce que** ledit procédé comprend les étapes suivantes mises en œuvre par ledit premier dispositif (S1) de gestion de communication :
- obtention (11) d'au moins un indicateur de risque (INC_{R}) de non respect de confidentialité de données associées à ladite au moins une communication, le risque de non respect de confidentialité provenant du deuxième dispositif de gestion de communication ;
- transmission (13) dudit au moins un indicateur de risque audit premier équipement (U1) de communication.

2. Procédé de gestion d'au moins une communication selon la revendication 1, **caractérisé en ce que** ladite au moins une communication correspond à une communication interpersonnelle enrichie conforme à la norme de communication RCS®.

3. Procédé de gestion d'au moins une communication selon la revendication 1, **caractérisé en ce que** lesdites étapes d'obtention (11) et de transmission (13) dudit au moins un indicateur de risque sont mises en œuvre par ledit premier dispositif (S1) de gestion de communications au cours d'une phase d'échange (200) avec ledit au moins un deuxième dispositif (S2) de gestion de communications,
ladite phase d'échange (200) comprenant au moins les étapes suivantes mises en œuvre par ledit premier dispositif (S1) de gestion de communications, pour ladite au moins une communication:
- réception (201) d'une demande de capacité dudit au moins un deuxième équipement (U2) de communication, ladite demande de capacité étant émise par ledit premier équipement (U1) de communication,
- émission (202) de ladite demande de capacité audit au moins un deuxième dispositif (S2) de gestion de communications,
- réception (203) d'une information représentative de capacité dudit au moins un deuxième équipement (U2) de communication émise par ledit au moins un deuxième dispositif (S2) de gestion de communications.

4. Procédé de gestion d'au moins une communication selon la revendication 3, **caractérisé en ce que** ladite information représentative de capacité dudit au moins un deuxième équipement (U2) de communication et ledit au moins un indicateur de risque sont transmis dans un même signal (31) audit premier équipement (U1) de communication.

5. Procédé de gestion d'au moins une communication selon la revendication 3, **caractérisé en ce que** ladite émission (202) de ladite demande de capacité est mise en œuvre avant ou en cours d'établissement de ladite au moins une communication.

6. Procédé de gestion d'au moins une communication selon la revendication 1, **caractérisé en ce que** le type dudit au moins un indicateur de risque est formaté (12) par ledit premier dispositif (S1) de gestion de communications en fonction du type de ladite communication.

7. Procédé de gestion d'au moins une communication selon la revendication 1, **caractérisé en ce que** ledit au moins un indicateur de risque est émis, sur requête dudit premier dispositif (S1) de gestion de communications, par :
- ledit au moins un deuxième dispositif (S2) de gestion de communications, et/ou
- une base de données (B_{D}) indépendante dudit au moins un deuxième dispositif (S2) de gestion de communications, ladite base de données stockant, respectivement pour une pluralité d'opérateurs ou de fournisseurs de services distincts comprenant un opérateur ou un fournisseur de services associé audit au moins un deuxième dispositif (S2) de gestion de communications, des informations de risque de non respect de confidentialité de données de communication.

8. Procédé de gestion d'au moins une communication selon la revendication 7, **caractérisé en ce que** ledit au moins un indicateur de risque est émis, sur requête dudit premier dispositif (S1) de gestion de communications, par ladite base de données indépendamment de ladite au moins une communication.

9. Procédé de gestion d'au moins une communication selon la revendication 1, **caractérisé en ce que** ledit au moins un indicateur de risque est émis automatiquement par une base de données (B_{D}) indépendante dudit au moins un deuxième dispositif (S2) de gestion de communications, lorsqu'une mise à jour de ladite base de données (B_{D}) est effectuée, ladite base de données stockant, respectivement pour une pluralité d'opérateurs ou de fournisseurs de services distincts comprenant un opérateur ou un fournisseur de services associé audit au moins un deuxième dispositif (S2) de gestion de communications, des informations de risque de non respect de confidentialité de données de communication.

10. Signal (31) de gestion d'au moins une communication entre un premier et au moins un deuxième équipements (U1, U2) de communication utilisés respectivement sur des réseaux (R1, R2) de communications distincts, gérés respectivement par un premier (S1) et au moins un deuxième (S2) dispositifs de gestion de communications, **caractérisé en ce qu'**il est transmis au cours d'une phase d'échange avec ledit au moins un deuxième dispositif (S2) de gestion de communications, et comprend une information représentative de capacité dudit au moins un deuxième équipement (U2) de communication et au moins un indicateur de risque de non respect, par ledit au moins un deuxième dispositif (S2) de gestion communications, de confidentialité de données associées à ladite au moins une communication.

11. Dispositif de gestion d'au moins une communication entre un premier et au moins un deuxième équipements (U1, U2) de communication utilisés respectivement sur des réseaux (R1, R2) de communications distincts, gérés respectivement par ledit dispositif de gestion et au moins un deuxième dispositif (S2) de gestion de communications,
**caractérisé en ce que** le dispositif de gestion d'au moins une communication comprend:
- un module d'obtention d'au moins un indicateur de risque de non respect de confidentialité de données associées à ladite au moins une communication, le risque de non respect de confidentialité provenant du deuxième dispositif de gestion de communication ;
- un module de transmission dudit au moins un indicateur de risque audit premier équipement (U1) de communication.

12. Equipement de communication (U1) configuré pour communiquer avec au moins un deuxième équipement (U2) de communication, lesdits au moins deux équipements de communication étant utilisés respectivement sur des réseaux (R1, R2) de communications distincts, gérés respectivement par un dispositif (S1) de gestion de communication selon la revendication 11 et au moins un deuxième dispositif (S2) de gestion de communications, **caractérisé en ce que** ledit équipement de communication comprend au moins un module de réception et de traitement d'au moins un indicateur de risque de non respect de confidentialité de données associées à ladite au moins une communication, le risque de non respect de confidentialité provenant du deuxième dispositif de gestion de communication.

13. Equipement de communication (U1) selon la revendication 12, **caractérisé en ce que** ledit module de réception et de traitement est activé au cours d'une phase d'échange avec ledit au moins un deuxième dispositif (S2) de gestion de communications, et reçoit un signal comprenant une information représentative de capacité dudit au moins un deuxième équipement (U2) de communication et ledit au moins un indicateur de risque de non respect de confidentialité de données associées à ladite au moins une communication, le risque de non respect de confidentialité provenant du deuxième dispositif de gestion de communication.

14. Equipement de communication (U1) selon la revendication 12, **caractérisé en ce qu'**il comprend en outre un module de blocage et/ou de déblocage d'établissement de communication avec ledit deuxième équipement de communication, ledit module de blocage et/ou de déblocage étant activé en fonction d'une valeur dudit au moins un indicateur de risque.

15. Programme de module logiciel comportant des instructions de code de programme de module logiciel pour l'exécution des étapes du procédé de gestion d'au moins une communication selon la revendication 1 lorsque ledit programme est exécuté par un ordinateur.

## Patentansprüche

1. Verfahren zur Verwaltung mindestens einer Kommunikation zwischen einer ersten und mindestens einer zweiten Kommunikationsausrüstung (U1, U2), die in unterschiedlichen Kommunikationsnetzwerken (R1, R2) verwendet werden, verwaltet durch eine erste (S1) bzw. mindestens eine zweite (S2) Kommunikationsverwaltungsvorrichtung,
**dadurch gekennzeichnet, dass** das Verfahren die folgenden Schritte enthält, die von der ersten Kommunikationsverwaltungsvorrichtung (S1) durchgeführt werden:
- Erhalt (11) mindestens eines Risikoindikators (INC_{R}) der Verletzung der Vertraulichkeit von Daten, die der mindestens einen Kommunikation zugeordnet sind, wobei das Risiko der Verletzung der Vertraulichkeit von der zweiten Kommunikationsverwaltungsvorrichtung kommt;
- Übertragung (13) des mindestens einen Risikoindikators an die erste Kommunikationsausrüstung (U1).

2. Verfahren zur Verwaltung mindestens einer Kommunikation nach Anspruch 1, **dadurch gekennzeichnet, dass** die mindestens eine Kommunikation einer erweiterten interpersonellen Kommunikation gemäß der Kommunikationsnorm RCS® entspricht.

3. Verfahren zur Verwaltung mindestens einer Kommunikation nach Anspruch 1, **dadurch gekennzeichnet, dass** die Schritte des Erhalts (11) und der Übertragung (13) des mindestens einen Risikoindikators von der ersten Kommunikationsverwaltungsvorrichtung (S1) während einer Austauschphase (200) mit der mindestens einen zweiten Kommunikationsverwaltungsvorrichtung (S2) durchgeführt werden,
wobei die Austauschphase (200) mindestens die folgenden Schritte enthält, die von der ersten Kommunikationsverwaltungsvorrichtung (S1) für die mindestens eine Kommunikation durchgeführt werden:
- Empfang (201) einer Kapazitätsanfrage der mindestens einen zweiten Kommunikationsausrüstung (U2), wobei die Kapazitätsanfrage von der ersten Kommunikationsausrüstung (U1) gesendet wird,
- Senden (202) der Kapazitätsanfrage an die mindestens eine zweite Kommunikationsverwaltungsvorrichtung (S2),
- Empfang (203) einer repräsentativen Kapazitätsinformation der mindestens einen zweiten Kommunikationsausrüstung (U2), gesendet von der mindestens einen zweiten Kommunikationsverwaltungsvorrichtung (S2).

4. Verfahren zur Verwaltung mindestens einer Kommunikation nach Anspruch 3, **dadurch gekennzeichnet, dass** die repräsentative Kapazitätsinformation der mindestens einen zweiten Kommunikationsausrüstung (U2) und der mindestens eine Risikoindikator in einem gleichen Signal (31) an die erste Kommunikationsausrüstung (U1) übertragen werden.

5. Verfahren zur Verwaltung mindestens einer Kommunikation nach Anspruch 3, **dadurch gekennzeichnet, dass** das Senden (202) der Kapazitätsanfrage vor dem oder während des Aufbaus der mindestens einen Kommunikation durchgeführt wird.

6. Verfahren zur Verwaltung mindestens einer Kommunikation nach Anspruch 1, **dadurch gekennzeichnet, dass** der Typ des mindestens einen Risikoindikators von der ersten Kommunikationsverwaltungsvorrichtung (S1) abhängig vom Typ der Kommunikation formatiert wird (12).

7. Verfahren zur Verwaltung mindestens einer Kommunikation nach Anspruch 1, **dadurch gekennzeichnet, dass** der mindestens eine Risikoindikator auf Anforderung der ersten Kommunikationsverwaltungsvorrichtung (S1) gesendet wird von:
- der mindestens einen zweiten Kommunikationsverwaltungsvorrichtung (S2), und/oder
- einer Datenbank (B_{D}) unabhängig von der mindestens einen zweiten Kommunikationsverwaltungsvorrichtung (S2), wobei die Datenbank für eine Vielzahl von unterschiedlichen Betreibern oder Dienstanbietern, die einen der mindestens einen zweiten Kommunikationsverwaltungsvorrichtung (S2) zugeordneten Betreiber oder Dienstanbieter enthält, Risikoinformationen der Verletzung der Vertraulichkeit von Kommunikationsdaten speichert.

8. Verfahren zur Verwaltung mindestens einer Kommunikation nach Anspruch 7, **dadurch gekennzeichnet, dass** der mindestens eine Risikoindikator auf Anforderung der ersten Kommunikationsverwaltungsvorrichtung (S1) von der Datenbank unabhängig von der mindestens einen Kommunikation gesendet wird.

9. Verfahren zur Verwaltung mindestens einer Kommunikation nach Anspruch 1, **dadurch gekennzeichnet, dass** der mindestens eine Risikoindikator automatisch von einer Datenbank (B_{D}) unabhängig von der mindestens einen zweiten Kommunikationsverwaltungsvorrichtung (S2) gesendet wird, wenn eine Aktualisierung der Datenbank (B_{D}) ausgeführt wird, wobei die Datenbank für eine Vielzahl von unterschiedlichen Betreibern bzw. Dienstanbietern, die einen der mindestens einen zweiten Kommunikationsverwaltungsvorrichtung (S2) zugeordneten Betreiber oder Dienstanbieter enthält, Risikoinformationen der Verletzung der Vertraulichkeit von Kommunikationsdaten speichert.

10. Verwaltungssignal (31) mindestens einer Kommunikation zwischen einer ersten und mindestens einer zweiten Kommunikationsausrüstung (U1, U2), die in unterschiedlichen Kommunikationsnetzwerken (R1, R2) verwendet werden, verwaltet von einer ersten (S1) bzw. mindestens einer zweiten (S2) Kommunikationsverwaltungsvorrichtung, **dadurch gekennzeichnet, dass** es während einer Austauschphase mit der mindestens einen zweiten Kommunikationsverwaltungsvorrichtung (S2) übertragen wird und eine repräsentative Kapazitätsinformation der mindestens einen zweiten Kommunikationsausrüstung (U2) und mindestens einen Risikoindikator der Verletzung der Vertraulichkeit von der mindestens einen Kommunikation zugeordneten Daten durch die mindestens eine zweite Kommunikationsverwaltungsvorrichtung (S2) enthält.

11. Verwaltungsvorrichtung mindestens einer Kommunikation zwischen einer ersten und mindestens einer zweiten Kommunikationsausrüstung (U1, U2), die in unterschiedlichen Kommunikationsnetzwerken (R1, R2) verwendet werden, verwaltet von der Verwaltungsvorrichtung bzw. mindestens einer zweiten Kommunikationsverwaltungsvorrichtung (S2), **dadurch gekennzeichnet, dass** die Verwaltungsvorrichtung mindestens einer Kommunikation enthält:
- ein Modul des Erhalts mindestens eines Risikoindikators der Verletzung der Vertraulichkeit von der mindestens einen Kommunikation zugeordneten Daten, wobei das Risiko der Verletzung der Vertraulichkeit von der zweiten Kommunikationsverwaltungsvorrichtung kommt;
- ein Modul der Übertragung des mindestens einen Risikoindikators an die erste Kommunikationsausrüstung (U1).

12. Kommunikationsausrüstung (U1), die konfiguriert ist, mit mindestens einer zweiten Kommunikationsausrüstung (U2) zu kommunizieren, wobei die mindestens zwei Kommunikationsausrüstungen in unterschiedlichen Kommunikationsnetzwerken (R1, R2) verwendet werden, verwaltet von einer Kommunikationsverwaltungsvorrichtung (S1) nach Anspruch 11 und mindestens einer zweiten Kommunikationsverwaltungsvorrichtung (S2),
**dadurch gekennzeichnet, dass** die Kommunikationsausrüstung mindestens ein Empfangs- und Verarbeitungsmodul mindestens eines Risikoindikators der Verletzung der Vertraulichkeit von der mindestens einen Kommunikation zugeordneten Daten enthält, wobei das Risiko der Verletzung der Vertraulichkeit von der zweiten Kommunikationsverwaltungsvorrichtung kommt.

13. Kommunikationsausrüstung (U1) nach Anspruch 12, **dadurch gekennzeichnet, dass** das Empfangs- und Verarbeitungsmodul während einer Austauschphase mit der mindestens einen zweiten Kommunikationsverwaltungsvorrichtung (S2) aktiviert wird und ein Signal empfängt, das eine repräsentative Kapazitätsinformation der mindestens einen zweiten Kommunikationsausrüstung (U2) und den mindestens einen Risikoindikator der Verletzung der Vertraulichkeit von der mindestens einen Kommunikation zugeordneten Daten enthält, wobei das Risiko der Verletzung der Vertraulichkeit von der zweiten Kommunikationsverwaltungsvorrichtung kommt.

14. Kommunikationsausrüstung (U1) nach Anspruch 12, **dadurch gekennzeichnet, dass** sie außerdem ein Modul zum Sperren und/oder Entsperren des Aufbaus einer Kommunikation mit der zweiten Kommunikationsausrüstung enthält, wobei das Sperr- und/oder Entsperrmodul abhängig von einem Wert des mindestens einen Risikoindikators aktiviert wird.

15. Softwaremodulprogramm, das Softwaremodul-Programmcodeanweisungen zur Ausführung der Schritte des Verfahrens zur Verwaltung mindestens einer Kommunikation nach Anspruch 1 aufweist, wenn das Programm von einem Computer ausgeführt wird.

## Claims

1. Method for managing at least one communication between a first and at least one second communication equipment (U1, U2) used on separate communication networks (R1, R2), respectively, and managed by a first communication management device (S1) and at least one second communication management device (S2), respectively, **characterized in that** said method comprises the following steps implemented by said first communication management device (S1):
- obtaining (11) at least one risk indicator (INC_{R}) indicating the risk of the confidentiality of data associated with said at least one communication being breached, the risk of the confidentiality being breached arising from the second communication management device;
- transmitting (13) said at least one risk indicator to said first communication equipment (U1) .

2. Method for managing at least one communication according to Claim 1, **characterized in that** said at least one communication corresponds to an enriched interpersonal communication in accordance with the RCS® communication standard.

3. Method for managing at least one communication according to Claim 1, **characterized in that** said steps of obtaining (11) and transmitting (13) said at least one risk indicator are implemented by said first communication management device (S1) during a phase of interchange (200) with said at least one second communication management device (S2),
said phase of interchange (200) comprising at least the following steps implemented by said first communication management device (S1), for said at least one communication:
- receiving (201) a request for the capability of said at least one second communication equipment (U2), said capability request being sent by said first communication equipment (U1),
- sending (202) said capability request to said at least one second communication management device (S2),
- receiving (203) an item of information representative of the capability of said at least one second communication equipment (U2), said item of information being sent by said at least one second communication management device (S2) .

4. Method for managing at least one communication according to Claim 3, **characterized in that** said item of information representative of the capability of said at least one second communication equipment (U2) and said at least one risk indicator are transmitted to said first communication equipment (U1) in the same signal (31) .

5. Method for managing at least one communication according to Claim 3, **characterized in that** said sending (202) of said capability request is implemented before or during the setting up of said at least one communication.

6. Method for managing at least one communication according to Claim 1, **characterized in that** the type of said at least one risk indicator is formatted (12) by said first communication management device (S1) on the basis of the type of said communication.

7. Method for managing at least one communication according to Claim 1, **characterized in that** said at least one risk indicator is sent, at the request of said first communication management device (S1), by:
- said at least one second communication management device (S2), and/or
- a database (B_{D}) independent of said at least one second communication management device (S2), said database storing, for a plurality of separate operators or service providers, respectively, comprising an operator or a service provider associated with said at least one second communication management device (S2), items of information regarding the risk of the confidentiality of communication data being breached.

8. Method for managing at least one communication according to Claim 7, **characterized in that** said at least one risk indicator is sent by said database, at the request of said first communication management device (S1), independently of said at least one communication.

9. Method for managing at least one communication according to Claim 1, **characterized in that** said at least one risk indicator is sent automatically by a database (B_{D}) independent of said at least one second communication management device (S2) when said database (B_{D}) is updated, said database storing, for a plurality of separate operators or service providers, respectively, comprising an operator or a service provider associated with said at least one second communication management device (S2), items of information regarding the risk of the confidentiality of communication data being breached.

10. Signal (31) for managing at least one communication between a first and at least one second communication equipment (U1, U2) used on separate communication networks (R1, R2), respectively, and managed by a first communication management device (S1) and at least one second communication management device (S2), respectively, **characterized in that** said signal is transmitted during a phase of interchange with said at least one second communication management device (S2) and comprises an item of information representative of the capability of said at least one second communication equipment (U2) and at least one risk indicator indicating the risk of said at least one second communication management device (S2) breaching the confidentiality of data associated with said at least one communication.

11. Device for managing at least one communication between a first and at least one second communication equipment (U1, U2) used on separate communication networks (R1, R2), respectively, and managed by said management device and at least one second communication management device (S2), respectively,
**characterized in that** the device for managing at least one communication comprises:
- a module for obtaining at least one risk indicator indicating the risk of the confidentiality of data associated with said at least one communication being breached, the risk of the confidentiality being breached arising from the second communication management device;
- a module for transmitting said at least one risk indicator to said first communication equipment (U1) .

12. Communication equipment (U1) configured to communicate with at least one second communication equipment (U2), said at least two communication equipments being used on separate communication networks (R1, R2), respectively, and managed by a communication management device (S1) according to Claim 11 and at least one second communication management device (S2), respectively, **characterized in that** said communication equipment comprises at least one module for receiving and processing at least one risk indicator indicating the risk of the confidentiality of data associated with said at least one communication being breached, the risk of the confidentiality being breached arising from the second communication management device.

13. Communication equipment (U1) according to Claim 12, **characterized in that** said receiving and processing module is activated during a phase of interchange with said at least one second communication management device (S2) and receives a signal comprising an item of information representative of the capability of said at least one second communication equipment (U2) and said at least one risk indicator indicating the risk of the confidentiality of data associated with said at least one communication being breached, the risk of the confidentiality being breached arising from the second communication management device.

14. Communication equipment (U1) according to Claim 12, **characterized in that** it further comprises a module for blocking and/or enabling the setting up of communication with said second communication equipment, said blocking and/or enabling module being activated on the basis of a value of said at least one risk indicator.

15. Software module program including software module program code instructions for executing the steps of the method for managing at least one communication according to Claim 1 when said program is executed by a computer.
